# EUROPEAN PATENT SPECIFICATION

(11) **EP 2 441 259 B1**
(45) Date of publication and mention of the grant of the patent: **27.09.2017**
(21) Application number: 10728893.8
(22) Date of filing: 13.05.2010
(51) Int. Cl.: H04N 21/4623, H04N 21/6334, H04N 21/8352, H04N 21/8355, H04N 21/84, H04N 7/167

(54) **SECURE ASSOCIATION OF METADATA WITH CONTENT**
SICHERE ASSOZIATION VON METADATEN MIT INHALT
ASSOCIATION SÉCURISÉE DE MÉTADONNÉES À DU CONTENU

(30) Priority: 08.06.2009 US 268152 P
(43) Date of publication of application: 18.04.2012
(73) Proprietor: NDS Limited, Staines, Middlesex TW18 4EX (GB)
(72) Inventor: SANDLER, Leonid, 96429 Jerusalem (IL); TSURIA, Yossi, 93390 Jerusalem (IL)
(74) Representative: Marks & Clerk (Luxembourg) LLP
(86) International application number: PCT/IB2010/052136
(87) International publication number: WO 2010/143088

(56) References cited:
- EP-A1- 1 732 005
- WO-A1-2008/139335
- WO-A2-02/079955
- WO-A2-03/055219
- US-A1- 2006 047 952
- US-A1- 2007 124 796
- US-A1- 2008 086 757

## Description

### BACKGROUND OF THE INVENTION

The following standards are considered particularly relevant to the present invention: Digital Video Broadcast (DVB); Support for Use of Scrambling and Conditional Access (CA) within Digital Broadcasting Systems, October 1996, ETR 289;
Information Technology - Generic Coding of Moving Pictures and Associated Audio Information: Systems, December 2000, ISO/IEC 13818-1;
OpenCable Application Platform Specifications, OCAP 1.1 Profile, August 2008, OC-SP-OCAPI.1-D02-080807; and
OpenCable Specifications, CableCARD 2.0 interface Specification, February, 2009, OC-SP-CCIF2.0-117-090206; OC-SP-OCAPI.1-D02-080807; OC-SP-CCIF2.0-117-090206; ETR
289; and ISO/IEC 13818-1. The SHA-I and SHA-2 hash algorithms (collectively including all of: SHA-224; SHA-256; SHA-384; and SHA-512) are specified in FIPS 180.
A list of SHA-3 hash algorithm candidates is found at:
csrc.nist.gov/groups/ST/hash/sha-3/Roundl/submissions_rndl.html.
The following references, listed by publication number, are believed to reflect the current state of the art:
EP 1732005 of NEC Corporation; WO2008/060388 of Time Warner Cable, Inc.; US 2008/0123845 of Candelore;
US 2008/012386 of Candelore; and US 2008/183656 of Perng, et al. WO 03/055219 of Telefonaktiebolaget LM Ericsson discloses a method for associating metadata with encrypted content, applying a cryptographic hash function to both usage rights and the content key and providing cryptographic association between metadata and encrypted content.

### SUMMARY OF THE INVENTION

There is thus provided in accordance with an embodiment of the present invention a method and a system for associating metadata with an encrypted content item, as well as a method and a system for content utilization as defined in the claims.

### BRIEF DESCRIPTION OF THE DRAWINGS

The present invention will be understood and appreciated more fully from the following detailed description, taken in conjunction with the drawings in which:
Figs. 1A and 1B, taken together, are a simplified block diagram of data flow in a content distribution system, in which encrypted content and metadata associated with the encrypted content are depicted, the content distribution system constructed and operative in accordance with an embodiment of the present invention;
Fig. 2 is a simplified block diagram depicting production, during secure stream generation, of a secure metadata object in the system of Figs. 1A and 1B;
Fig. 3A is a simplified block diagram of a first embodiment of a secure metadata object of Figs. 1A and 1B;
Fig. 3B is a simplified block diagram of a second embodiment of the secure metadata object of Figs. 1A and 1B;
Fig. 4 is a simplified block diagram depicting, at a consumer device, an evaluation of the secure metadata object in the system of Figs. 1A and 1B; and
Figs. 5 - 6 are simplified flowcharts of preferred methods of operation of the system of Fig. 1.

### DETAILED DESCRIPTION OF AN EMBODIMENT

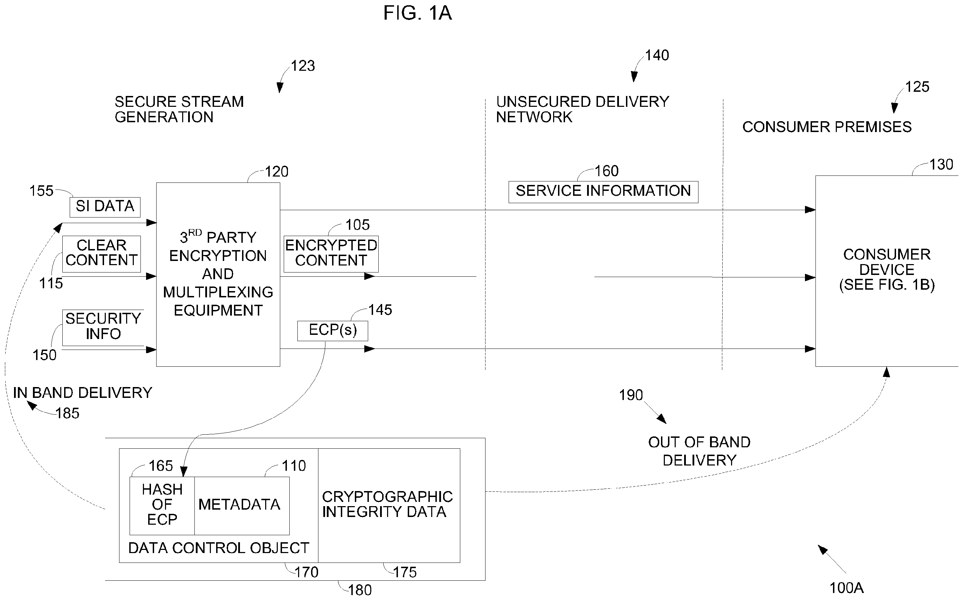

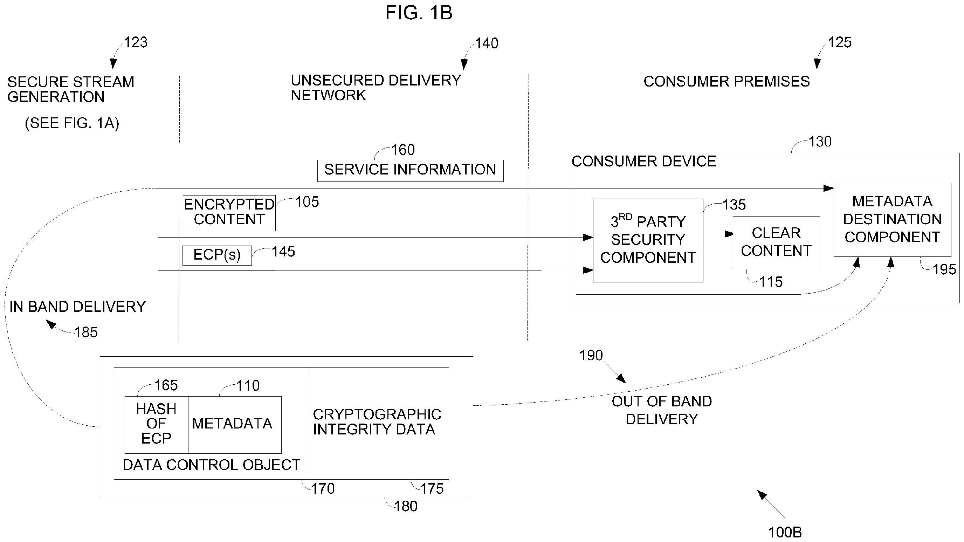

Reference is now made to Figs. 1A and 1B, which, taken together, are a simplified block diagram of data flow in a content distribution system 100A, 100B, in which encrypted content 105 and metadata 110 associated with the encrypted content 105 are depicted, the content distribution system 100A, 100B constructed and operative in accordance with an embodiment of the present invention. Those skilled in the art will appreciate that the metadata 110 is generated outside of the content distribution system 100A, 100B.

Throughout the present specification and claims the term "metadata" is used for ease of description. However, any appropriate cryptographic equivalent of the metadata may be used in the methods and systems described herein.

Content protection systems are typically based on encryption of the clear content 115. As is well known in the art, encryption of the clear content 115 is according to secret keys (not depicted), also known as control words. The keys are delivered separately to a consumer device 130 in some form of entitlement control packets (ECPs). For example and without limiting the generality of the foregoing, ECPs 145 may comprise Entitlement Control Messages (ECMs) defined by the MPEG2 System standard (ISO/IEC 13818-1, referred to above), or, alternatively, so called "content licenses" used in various DRM (digital rights management) systems.

Those skilled in the art will appreciate that each individual ECP 145 is uniquely associated with at least one portion of the encrypted content 105. For example, one crypto-period (a *crypto-period* is the time span during which a specific cryptographic key (control word) is intended for use.). For example and without limiting the generality of the foregoing, if the individual ECP 145 comprises an ECM, then the ECM is required by the consumer device 130 in order to produce a control word enabling decryption of the a first portion of encrypted content 105 for one crypto-period. A second ECM is required by the consumer device 130 in order to produce a control word enabling decryption of a second portion of encrypted content for the next crypto-period, and so forth for each ensuing crypto-period.

In some cases it is necessary to provide additional information to the consumer device 130 (hereinafter, "metadata" 110), as explained below. The metadata 110, in such cases, is often cryptographically associated with such encrypted content 105. Further, it is often the case that any underlying content protection system cannot be utilized or modified in order to cryptographically associate the metadata 110 with the encrypted content 105. For example and without limiting the generality of the foregoing, clear content 115 (the term "clear", as used herein, as in, "clear content", is used to mean not encrypted; that is to say, clear content is content which is not encrypted) may be encrypted using a 3^{rd} party system 120. As a non-limiting example of a typical 3^{rd} party system 120, the 3^{rd} party system 120 would comprise an MPEG2 compliant encryption and multiplexing 3^{rd} party system 120. The 3^{rd} party system 120, which is operative during secure stream generation 123 typically further comprises components of a conditional access (CA) system. Decryption of the encrypted content 105 is performed on consumer premises 125 in the consumer device 130 comprising by a 3^{rd} party security component 135 such as CableCard (see, for instance, OC-SP-CCIF2.0-I17-090206 and OC-SP-OCAP1.1-D02-080807, referred to above).

Typically, the 3^{rd} party security component 135, such as the CableCard, comprises an interface which cannot be modified or extended for the purposes of metadata insertion. However, other components in the consumer device 130 may require metadata 110 related, for example, to usage rules of the encrypted content 105 in a home network environment. Such metadata 110 must be securely associated with the content 105. If the metadata 110 is not securely associated with the content 105, there is a chance that decoupling between the content 105 and the metadata 110 may occur, particularly while the content is in an unsecured delivery network 140 during delivery to the consumer premises 125. Alternatively, decoupling between the content 105 and the metadata 110 may occur at a later time at the consumer premises 125.

One method of the present invention allows secure association of any kind of metadata 110 with the encrypted content 105 in any environment or system wherein the encrypted content 105 is already associated with any form of entitlement control packets 145. It is appreciated that the method of the present invention described herein enables performing the association of the encrypted content 105 with the metadata 110 without any understanding of the entitlement control packets 145 and without any cooperation from the owner of the entitlement control packets 145.

Those skilled in the art will appreciate that the method of the present invention described herein that establishes a cryptographic association between metadata 110 and the ECP 145 is cryptographically identical to the cryptographic association between the metadata 110 and the encrypted content 105 itself.

The operation of the system of Figs. 1A and 1B is now described. Clear content 115 is input into the 3^{rd} party system 120. It is appreciated that the description of the encryption and multiplexing system 120 herein as an MPEG2 compliant encryption and multiplexing system 120 is by way of example only, and is not meant to be limiting. The 3^{rd} party system 120 encrypts the clear content 115 and outputs the encrypted content 105. Security information 150 is also input into the 3^{rd} party system 120. The 3^{rd} party system 120 processes the input security information 150, and outputs ECPs 145. In addition, service information (SI) related data 155 is input into the 3^{rd} party system 120 and Service Information (SI) 160 is output.

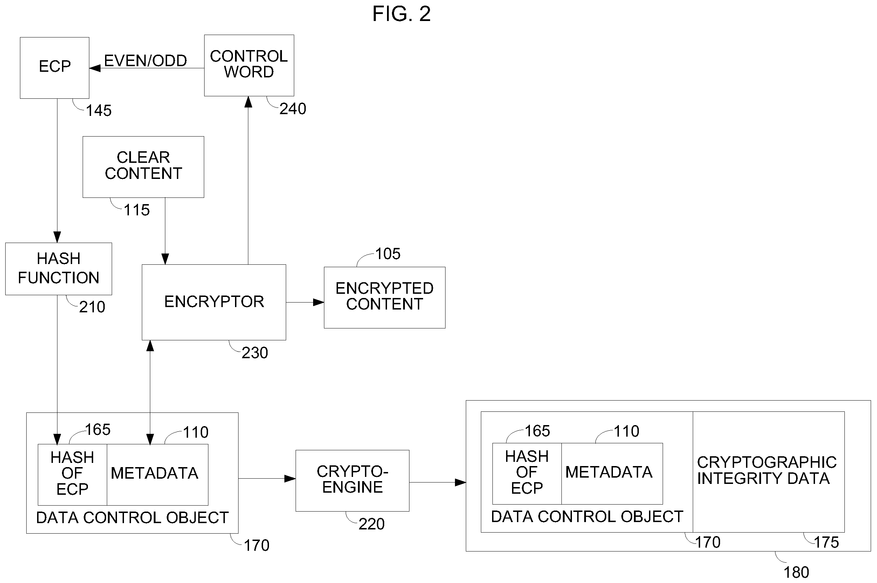

Reference is now additionally made to Fig. 2, which is a simplified block diagram depicting production, during secure stream generation, of a secure metadata object 180 in the system of Figs. 1A and 1B. Each individual ECP 145 is input into a cryptographic hash function 210. Any appropriate cryptographic hash function may be used, such as, example and without limiting the generality of the foregoing, SHA-1; SHA-2 (collectively including all of: SHA-224; SHA-256; SHA-384; and SHA-512); and various SHA-3 candidates. SHA-1 and SHA-2 are specified in FIPS 180. A list of SHA-3 candidates is found, at the time the present application was drafted, at: csrc.nist.gov/groups/ST/hash/sha-3/Round1/submissions_md1.html. The hash function 210 produces a hash 165 of the ECP 145.

The hash 165 of the ECP 145 is combined with the metadata 110, thereby producing a data control object 170. A crypto-engine 220 cryptographically associates the combined ECP hash 165 value and the metadata 110 which comprise the data control object 170, thereby generating cryptographic integrity data 175. The cryptographic integrity data 175 is joined to the data control object 170, thereby producing the secure metadata object 180. The secure metadata object 180 then sent to the consumer device 130. The nature of the joining of the cryptographic integrity data 175 to the data control object 170 is detailed below.

Throughout the present specification and claims the term "data control object 170" is used for ease of description. However, any appropriate cryptographic equivalent of the data control object 170 may be used in the methods and systems described herein.

The sending of the secure metadata object 180 to the consumer device 130 may be performed by any appropriate method known in the art for sending data between devices. For ease of depiction, Figs. 1A and 1B depict an in-band delivery method 185, whereby the secure metadata object 180 is sent to the consumer device 130 comprised in the SI data 155, as a portion of the service information 160. Alternatively, where an out-of-band delivery channel 190 is operative, the secure metadata object 180 may be sent to the consumer device 130 as out-of-band data. Out-of-band delivery channels 190 are known in the art, and include, for example and without limiting the generality of the foregoing, IP communication.

Returning to the discussion of the ECP 145 of Fig. 2, an encryptor 230 receives the clear content 115 and, using a control word 240 as an encryption key, encrypts the clear content 115. The 3^{rd} party system 120 produces the ECP 145 for the control word 240, as is well know in the art.

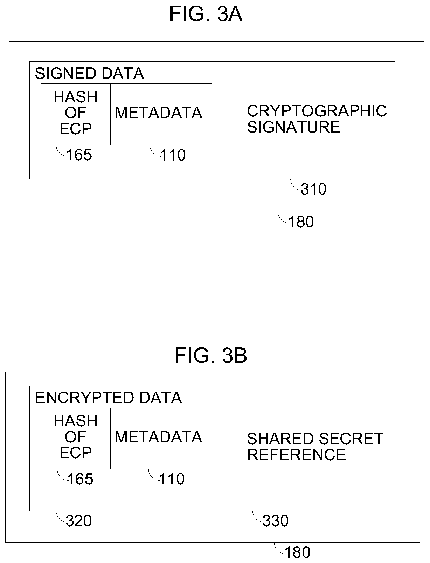

The nature of the secure metadata object 180 is now discussed. Reference is now additionally made to Fig. 3A, which is a simplified block diagram of the secure metadata object 180 of Figs. 1A and 1B. In the first embodiment of the secure metadata object 180 of Figs. 1A and 1B, after the ECP 145 is prepared by the 3^{rd} party system 120, a copy of the ECP 145 is input into a hash function 210, thereby producing the hash of the ECP 165. The hash of the ECP 165 is joined to the metadata 110, typically by concatenation of the hash of the ECP 165 and the metadata 110. The joined hash of the ECP 165 and metadata 110 are then cryptographically signed, thereby producing a cryptographic signature 310 of the joined hash of the ECP 165 and metadata 110. It is appreciated that the cryptographic signature 310 of Fig. 3A corresponds to the cryptographic integrity data 175 of Figs. 1A and 1B. For example and without limiting the generality of the foregoing, the cryptographic signature 310 can be produced using any appropriate well known public key infrastructure (PKI) signature routine. Those skilled in the art will appreciate that the hash of the ECP 165 is used the present embodiment of the invention only for size optimization. In principle, the entire ECP 145 itself can be used as well in the present embodiment of the invention. The use of the cryptographically signed joined hash of the ECP 165 and metadata 110 in the consumer premises 125 is described below.

Reference is now additionally made to Fig. 3B, which is a simplified block diagram of a second embodiment of the secure metadata object 180 of Figs. 1A and 1B. In the second embodiment of the data control object of Figs. 1A and 1B, after the ECP 145 is prepared by the 3^{rd} party system 120, a copy of the ECP 145 is input into a hash function 210, thereby producing the hash of the ECP 165. The hash of the ECP 165 is joined to the metadata 110, typically by concatenation of the hash of the ECP 165 and the metadata 110. The joined hash of the ECP 165 and metadata 110 are then encrypted, thereby producing an encrypted data object 320 comprising the joined hash of the ECP 165 and metadata 110. For example and without limiting the generality of the foregoing, the encrypted data object 320 can be produced using any appropriate well known encryption algorithm, such as, but not limited to AES, 3DES, or Serpent. Those skilled in the art will appreciate that the hash of the ECP 165 is used the present embodiment of the invention only for size optimization. In principle, the entire ECP 145 itself can be used as well in the present embodiment of the invention. The use of the encrypted data object 320 in the consumer premises 125 is described below.

A reference 330 to a shared secret is appended to the encrypted data object 320 prior to sending the encrypted data object 320 to the consumer premises 125. The shared secret is a secret shared by the crypto-engine 220 and the consumer device 130. The encrypted data object 320 is typically encrypted using the actual shared secret as an encryption key.

It is appreciated that if the secure metadata object 180 is received at the consumer device 130 comprising the encrypted data object 320 comprising the joined hash of the ECP 165 and metadata 110, then the consumer device 130 will have to decrypt the encrypted data object 320 in order to access and validate the hash of the ECP 165 and metadata 110.

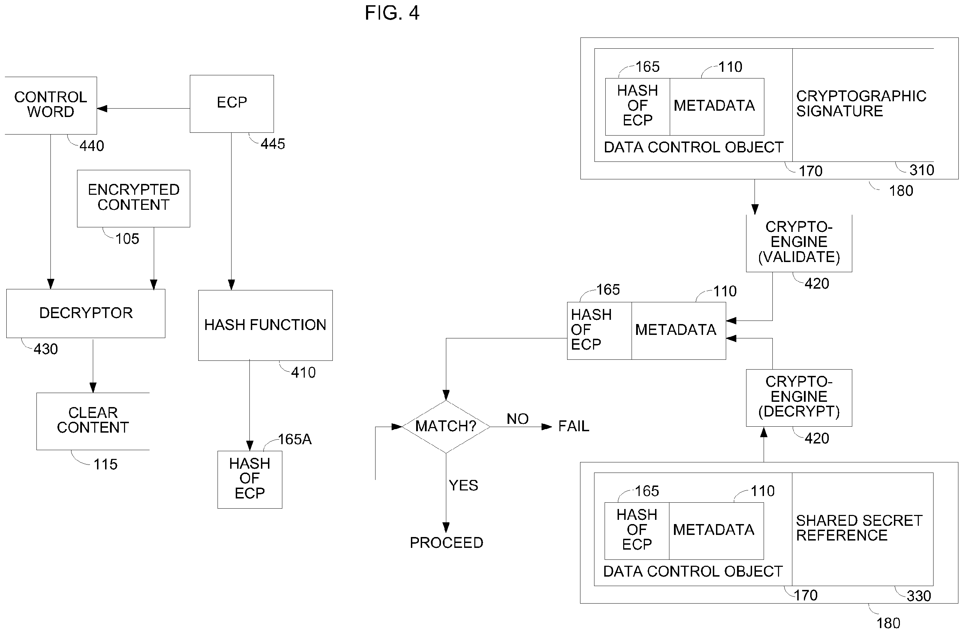

Returning to the discussion of Fig. 1B, reference is now additionally made to Fig. 4, which is a simplified block diagram depicting, at the consumer device 130, an evaluation of the secure metadata object 180 in the system of Figs. 1A and 1B. The secure metadata object 180 is received at the consumer device 130. The following discussion relates to the two embodiments of the secure metadata object 180 described above with reference to Figs. 3A and 3B, specifically: in the first embodiment, the data control object 170 is appended to a cryptographic signature 310; and in the second embodiment, the data control object 170 is appended to the reference 330 to a shared secret. Nonetheless, the embodiments described are not meant to be limiting and are brought in an exemplary fashion.

If the secure metadata object 180 is appended to the cryptographic signature 310, it is inputted into a crypto-engine 420 for validation. Alternatively, If the secure metadata object 180 is appended to the reference 330 to the shared secret, it is inputted into a crypto-engine 420 for decryption. In any event, the decrypted or validated data control object 170 separated to the metadata 110 and the hash of the ECP 165.

A received ECP 445 is input into a hash function 410, the hash function 410 being identical to the hash function 210 (Fig. 2) used during secure stream generation. A hash 165A of the ECP is output by the hash function 410. The hash 165A of the received ECP 445 is compared to the hash of the ECP 165 received in the secure metadata object 180.

If the two hashes, hash 165A of the received ECP 445 and the hash 165 of the ECP received in the secure metadata object 180 do not match, the comparison is determined to have failed. However, if the two hashes, hash 165A of the received ECP 445 and the hash 165 of the ECP received in the secure metadata object 180 do match, the comparison is determined to have succeeded.

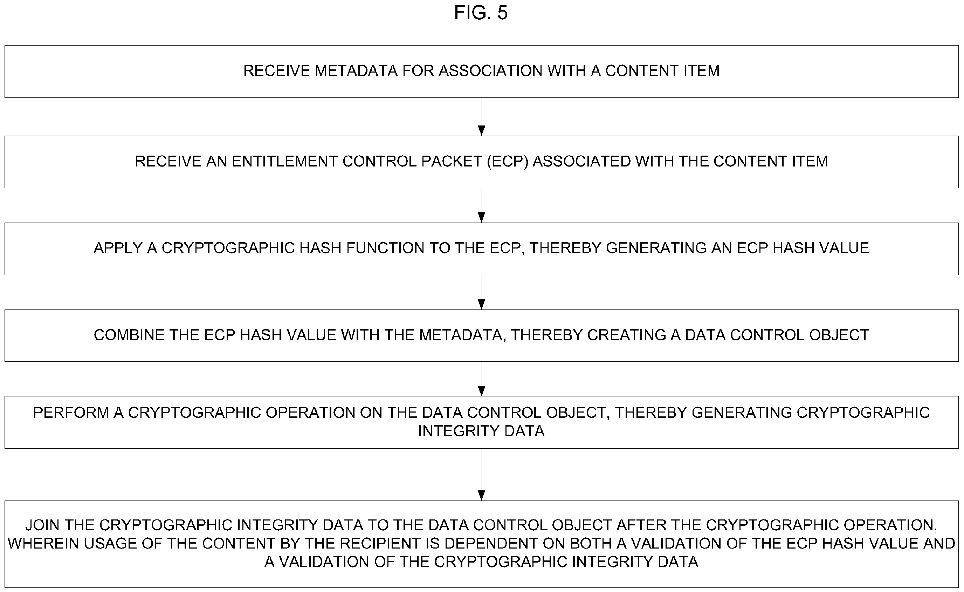

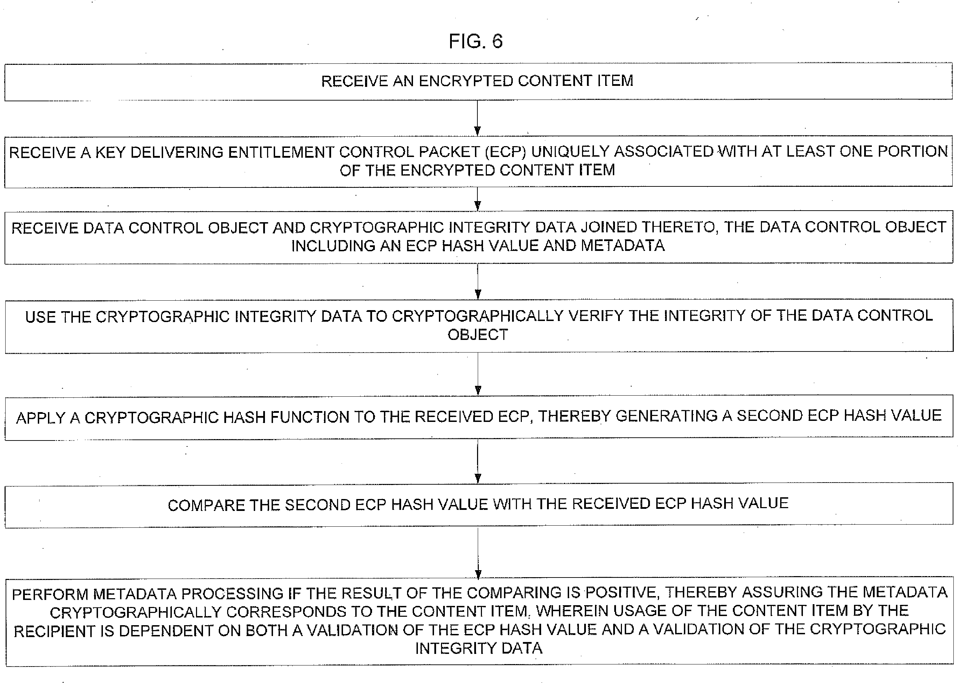

Reference is now made to Figs. 5 - 6, which are simplified flowcharts of preferred methods of operation of the system of Fig. 1. Figs. 5 - 6 are believed to be self-explanatory in light of the above discussion.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims and equivalents thereof:

## Claims

1. A method for associating metadata (110) with an encrypted content item (105), the method comprising:
receiving metadata (110) for association with a content item (105);
receiving a key-delivering entitlement control packet (145) uniquely associated with at least one portion of the encrypted content item (105);
applying a cryptographic hash function (210) to the entitlement control packet (145), thereby generating an entitlement control packet hash value;
combining the entitlement control packet hash value (165) with the metadata (110), thereby creating a data control object (170)
performing a cryptographic operation on the data control object (170), thereby generating cryptographic integrity data (175);
joining the cryptographic integrity data (175) to the data control object (170) after the cryptographic operation; and
sending the cryptographically associated data control object joined to the cryptographic integrity data (180) to a recipient.

2. The method according to claim 1 and wherein the entitlement control packet (145) comprises one of: an entitlement control message; and a digital rights management content license.

3. The method according to claim 1 or 2, wherein the sending comprises one of: in-band sending (185); and out-of-band sending (190).

4. The method according to claim 1, 2 or 3, wherein the metadata (110) comprises at least one of: service information (160); and a usage rule governing the usage of the content item (115).

5. The method according to any one of claims 1 to 4, wherein at least one of:
the cryptographically associating the combined entitlement control packet hash value (165) and the metadata (110) which comprise the data control object (170) comprises digitally signing the data control object (170), thereby generating a digital signature (310); and
the joined cryptographic integrity data (175) comprises the digital signature (310).

6. The method according to any one of claims 1 to 4, wherein
the cryptographically associating the data control object (170) comprises encrypting the data control object (170) according to a key, the key comprising a secret shared with the recipient; and
the joined cryptographic integrity data (175) comprises a reference to the secret shared (330) with the recipient.

7. The method according to any one of claims 1 to 6, wherein the cryptographic hash function (210) comprises one of: SHA-1; SHA-2; and a SHA-3 candidate function.

8. A method for content utilization at a recipient,
the method comprising:
receiving an encrypted content item (105);
receiving a key-delivering entitlement control packet (145) uniquely associated with at least one portion of the encrypted content item (105);
receiving a data control object (170) and cryptographic integrity data (175) joined thereto; the data control object (170) comprising:
an entitlement control packet hash value (165);
metadata (110);
using the cryptographic integrity data (175) to cryptographically verify the integrity of the data control object (170);
applying a cryptographic hash function to the received entitlement control packet (145), thereby generating a second entitlement control packet hash value (165A);
comparing the second entitlement control packet hash value (165A) with the received entitlement control packet hash value (165); and
performing metadata processing if the result of the comparing is positive, thereby assuring the metadata cryptographically corresponds to the content item (105),
wherein utilization of the content item by the recipient is dependent on both said comparing of the entitlement control packet hash values (165,165A) and said verifying of the integrity of the data control object (170).

9. The method according to claim 8, wherein the entitlement control packet (145) comprises one of: an entitlement control message; and a digital rights management content license.

10. The method according to either claim 8 or claim 9, wherein the receiving the data control object comprises one of: in-band receiving; and out-of-band receiving.

11. The method according to any one of claims 8, 9 or 10, wherein the metadata comprises at least one of: service information (160); and a usage rule governing the usage of the content item.

12. The method according to any one of claims 8 to 11, wherein the entitlement control packet hash value and the metadata comprised in the data control object have been digitally signed and the cryptographic integrity data comprises the digital signature of the entitlement control packet hash value and the metadata.

13. The method according to any of claims 9 - 11 wherein:
the entitlement control packet hash value (165) and the metadata (110) comprised in the data control object (170) have been encrypted; wherein the encrypted entitlement control packet hash value (165) and the metadata (110) have been encrypted according to a key, the key comprising a secret shared with the sender of the received data control object;
the cryptographic integrity data comprises a reference to the shared secret (330); and
using the cryptographic integrity data (175) to cryptographically verify the entitlement control packet hash value (165) and the metadata (110) comprises using the key to decrypt the encrypted entitlement control packet hash value and metadata.

14. The method according to any one of claims 8 to 13, wherein the cryptographic hash function (210) comprises one of: SHA-1; SHA-2; and SHA-3 candidate function.

15. A system for associating metadata (110) with an encrypted content item (105), the system comprising:
a metadata receiver operative to receive metadata (110) for association with a content item (105);
an entitlement control packet receiver operative to receive a key-delivering entitlement control packet (145) uniquely associated with at least one portion of the encrypted content item (105);
a cryptographic engine operative to apply a cryptographic hash function (210) to the entitlement control packet, thereby generating an entitlement control packet hash value (165);
a processor operative to combine the entitlement control packet hash value (165) with the metadata (110), thereby creating a data control object (170);
a second cryptographic engine (220) which performs a cryptographic operation on the data control object (170), thereby generating cryptographic integrity data (175);
a second processor which joins the cryptographic integrity data (175) to the data control object (170) after the cryptographic operation; and
wherein the system is configured to send the cryptographically associated data control object joined to the cryptographic integrity data (180) to a recipient.

16. A system for content utilization at a recipient, the system comprising:
a content receiver (130) operative to receive an encrypted content item (105);
an entitlement control packet receiver (135) operative to receive a key-delivering entitlement control packet (145) uniquely associated with at least one portion of the encrypted content item (105);
a data control object receiver (195) operative to receive a data control object (170) and cryptographic integrity data (175) joined thereto; the data control object (170) comprising:
an entitlement control packet hash value (165); and
metadata (110);
a cryptographic engine (420) operative to use the cryptographic integrity data (175) to cryptographically verify the integrity of the data control object (170);
a second cryptographic engine operative to apply a cryptographic hash function (410) to the received entitlement control packet (445), thereby generating a second entitlement control packet hash value (165A);
a comparing processor operative to compare the second entitlement control packet hash value (165) with the received entitlement control packet hash value (165A); and
a metadata processor operative to perform metadata processing if the result of the comparing is positive, thereby assuring the metadata (110) cryptographically corresponds to the content item (105),
wherein utilization. of the content item by the recipient is dependent on both said comparing of the entitlement control packet hash values (165,165A) and said verifying of the integrity of the data control object (170).

## Patentansprüche

1. Verfahren zum Verknüpfen von Metadaten (110) mit einem verschlüsselten Inhaltselement (105), wobei das Verfahren Folgendes umfasst:
Empfangen von Metadaten (110) zum Verknüpfen mit einem Inhaltselement (105);
Empfangen eines schlüsselliefernden Berechtigungssteuerpakets (145), das mit mindestens einem Abschnitt des verschlüsselten Inhaltselements (105) eindeutig verknüpft ist;
Anwenden einer kryptographischen Hashfunktion (210) auf das Berechtigungssteuerpaket (145), dadurch Erzeugen eines Berechtigungssteuerpaket-Hashwerts;
Kombinieren des Berechtigungssteuerpaket-Hashwerts (165) mit den Metadaten (110), dadurch Erstellen eines Datensteuerobjekts (170)
Durchführen einer kryptographischen Operation am Datensteuerobjekt (170), dadurch Erzeugen von kryptographischen Integritätsdaten (175);
Verbinden der kryptographischen Integritätsdaten (175) mit dem Datensteuerobjekt (170) nach der kryptographischen Operation und
Senden des kryptographisch verknüpften Datensteuerobjekts, das mit den kryptographischen Integritätsdaten (180) verbunden ist, an einen Empfänger.

2. Verfahren nach Anspruch 1 und wobei das Berechtigungssteuerpaket (145) eines von Folgendem umfasst: eine Berechtigungssteuernachricht und eine Digital-Rights-Management-Inhaltslizenz.

3. Verfahren nach Anspruch 1 oder 2, wobei das Senden eines von Folgendem umfasst: Inbandsenden (185) und Außerbandsenden (190).

4. Verfahren nach Anspruch 1, 2 oder 3, wobei die Metadaten (110) eines von Folgendem umfassen: Dienstinformationen (160) und eine Nutzungsregel, die die Nutzung des Inhaltselements (115) reguliert.

5. Verfahren nach einem der Ansprüche 1 bis 4, wobei mindestens eines von Folgendem:
das kryptographische Verknüpfen des kombinierten Berechtigungssteuerpaket-Hashwerts (165) und der Metadaten (110), die das Datensteuerobjekt (170) umfassen, das digitale Signieren des Datensteuerobjekts (170) umfasst, dadurch Erzeugen einer digitalen Signatur (310); und
die verbundenen kryptographischen Integritätsdaten (175) die digitale Signatur (310) umfassen.

6. Verfahren nach einem der Ansprüche 1 bis 4, wobei
das kryptographische Verknüpfen des Datensteuerobjekts (170) das Verschlüsseln des Datensteuerobjekts (170) gemäß einem Schlüssel umfasst, wobei der Schlüssel ein mit dem Empfänger geteiltes Geheimnis umfasst; und
die verbundenen kryptographischen Integritätsdaten (175) einen Verweis auf das mit dem Empfänger geteilte Geheimnis (330) umfassen.

7. Verfahren nach einem der Ansprüche 1 bis 6, wobei die kryptographische Hashfunktion (210) eines von Folgendem umfasst: SHA-1; SHA-2 und eine SHA-3-Kandidatenfunktion.

8. Verfahren zur Inhaltsnutzung bei einem Empfänger, wobei das Verfahren Folgendes umfasst:
Empfangen eines verschlüsselten Inhaltselements (105);
Empfangen eines schlüsselliefernden Berechtigungssteuerpakets (145), das mit mindestens einem Abschnitt des verschlüsselten Inhaltselements (105) eindeutig verknüpft ist;
Empfangen eines Datensteuerobjekts (170) und kryptographischer Integritätsdaten (175), die damit verbunden sind;
wobei das Datensteuerobjekt (170) Folgendes umfasst:
einen Berechtigungssteuerpaket-Hashwert (165);
Metadaten (110);
Verwenden der kryptographischen Integritätsdaten (175), um die Integrität des Datensteuerobjekts (170) kryptographisch zu verifizieren;
Anwenden einer kryptographischen Hashfunktion auf das empfangene Berechtigungssteuerpaket (145), dadurch Erzeugen eines zweiten Berechtigungssteuerpaket-Hashwerts (165A);
Vergleichen des zweiten Berechtigungssteuerpaket-Hashwerts (165A) mit dem empfangenen Berechtigungssteuerpaket-Hashwert (165) und
Durchführen einer Metadatenverarbeitung, wenn das Ergebnis des Vergleichs positiv ist, wobei gewährleistet wird, dass die Metadaten dem Inhaltselement (105) kryptographisch entsprechen,
wobei die Nutzung des Inhaltselements durch den Empfänger sowohl vom Vergleichen der Berechtigungssteuerpaket-Hashwerte (165, 165A) als auch vom Verifizieren der Integrität des Datensteuerobjekts (170) abhängig ist.

9. Verfahren nach Anspruch 8, wobei das Berechtigungssteuerpaket (145) eines von Folgendem umfasst: eine Berechtigungssteuernachricht und eine Digital-Rights-Management-Inhaltslizenz.

10. Verfahren nach Anspruch 8 oder 9, wobei das Empfangen des Datensteuerobjekts eines von Folgendem umfasst: Inbandempfangen und Außerbandempfangen.

11. Verfahren nach einem der Ansprüche 8, 9 oder 10, wobei die Metadaten eines von Folgendem umfassen: Dienstinformationen (160) und eine Nutzungsregel, die die Nutzung des Inhaltselements reguliert.

12. Verfahren nach einem der Ansprüche 8 bis 11, wobei der Berechtigungssteuerpaket-Hashwert und die Metadaten, die im Datensteuerobjekt enthalten sind, digital signiert wurden und die kryptographischen Integritätsdaten die digitale Signatur des Berechtigungssteuerpaket-Hashwerts und die Metadaten umfassen.

13. Verfahren nach einem der Ansprüche 9-11, wobei:
der Berechtigungssteuerpaket-Hashwert (165) und die Metadaten (110), die im Datensteuerobjekt (170) enthalten sind, verschlüsselt wurden; wobei der verschlüsselte Berechtigungssteuerpaket-Hashwert (165) und die Metadaten (110) gemäß einem Schlüssel verschlüsselt wurden, wobei der Schlüssel ein mit dem Absender des empfangenen Datensteuerobjekts geteiltes Geheimnis umfasst;
die kryptographischen Integritätsdaten einen Verweis auf das geteilte Geheimnis (330) umfassen; und
Verwenden der kryptographischen Integritätsdaten (175), um den Berechtigungssteuerpaket-Hashwert (165) und die Metadaten (110) kryptographisch zu verifizieren, das Verwenden des Schlüssels umfasst, um den verschlüsselten Berechtigungssteuerpaket-Hashwert und die verschlüsselten Metadaten zu entschlüsseln.

14. Verfahren nach einem der Ansprüche 8 bis 13, wobei die kryptographische Hashfunktion (210) eines von Folgendem umfasst: SHA-1; SHA-2 und SHA-3-Kandidatenfunktion.

15. System zum Verknüpfen von Metadaten (110) mit einem verschlüsselten Inhaltselement (105), wobei das System Folgendes umfasst:
einen Metadatenempfänger, der betreibbar ist, um Metadaten (110) zum Verknüpfen mit einem Inhaltselement (105) zu empfangen;
einen Berechtigungssteuerpaketempfänger, der betreibbar ist, um ein schlüssellieferndes Berechtigungssteuerpaket (145) zu empfangen, das mit mindestens einem Abschnitt des verschlüsselten Inhaltselements (105) eindeutig verknüpft ist;
eine kryptographische Maschine, die betreibbar ist, eine kryptographische Hashfunktion (210) auf das Berechtigungssteuerpaket anzuwenden, dadurch Erzeugen eines Berechtigungssteuerpaket-Hashwerts (165);
einen Prozessor, der betreibbar ist, um den Berechtigungssteuerpaket-Hashwert (165) mit den Metadaten (110) zu kombinieren, dadurch Erstellen eines Datensteuerobjekts (170);
eine zweite kryptographische Maschine (220), die eine kryptographische Operation am Datensteuerobjekt (170) durchführt, dadurch Erzeugen von kryptographischen Integritätsdaten (175);
einen zweiten Prozessor, der die kryptographischen Integritätsdaten (175) nach der kryptographischen Operation mit dem Datensteuerobjekt (170) verbindet; und
wobei das System dazu ausgelegt ist, das kryptographisch verknüpfte Datensteuerobjekt, das mit den kryptographischen Integritätsdaten (180) verbunden ist, an einen Empfänger zu senden.

16. System zur Inhaltsnutzung bei einem Empfänger, wobei das System Folgendes umfasst:
einen Inhaltsempfänger (130), der betreibbar ist, ein verschlüsseltes Inhaltselement (105) zu empfangen;
einen Berechtigungssteuerpaketempfänger (135), der betreibbar ist, ein schlüssellieferndes Berechtigungssteuerpaket (145) zu empfangen, das mit mindestens einem Abschnitt des verschlüsselten Inhaltselements (105) eindeutig verknüpft ist;
einen Datensteuerobjektempfänger (195), der betreibbar ist, ein Datensteuerobjekt (170) und kryptographische Integritätsdaten (175), die damit verbunden sind, zu empfangen; wobei das Datensteuerobjekt (170) Folgendes umfasst:
einen Berechtigungssteuerpaket-Hashwert (165) und
Metadaten (110);
eine kryptographische Maschine (420), die betreibbar ist, die kryptographischen Integritätsdaten (175) zu verwenden, um die Integrität des Datensteuerobjekts (170) kryptographisch zu verifizieren;
eine zweite kryptographische Maschine, die betreibbar ist, eine kryptographische Hashfunktion (410) auf das empfangene Berechtigungssteuerpaket (445) anzuwenden, dadurch Erzeugen eines zweiten Berechtigungssteuerpaket-Hashwerts (165A);
einen Vergleichsprozessor, der betreibbar ist, den zweiten Berechtigungssteuerpaket-Hashwert (165) mit dem empfangenen Berechtigungssteuerpaket-Hashwert (165A) zu vergleichen; und
einen Metadatenprozessor, der betreibbar ist, eine Metadatenverarbeitung durchzuführen, wenn das Ergebnis des Vergleichs positiv ist, wobei gewährleistet wird, dass die Metadaten (110) dem Inhaltselement (105) kryptographisch entsprechen,
wobei die Nutzung des Inhaltselements durch den Empfänger sowohl vom Vergleichen der Berechtigungssteuerpaket-Hashwerte (165,165A) als auch vom Verifizieren der Integrität des Datensteuerobjekts (170) abhängig ist.

## Revendications

1. Procédé pour associer des métadonnées (110) avec un article de contenu (105) crypté, le procédé comprenant :
la réception de métadonnées (110) pour une association avec un article de contenu (105) ;
la réception d'un paquet de contrôle de droits de distribution de clé (145) associé de manière unique à au moins une partie de l'article de contenu (105) crypté ;
l'application d'une fonction de hachage cryptographique (210) au paquet de contrôle de droits (145), générant de ce fait une valeur de hachage de paquet de contrôle de droits ;
la combinaison de la valeur de hachage de paquet de contrôle de droits (165) avec les métadonnées (110), créant de ce fait un objet de contrôle de données (170) ;
l'exécution d'une opération cryptographique sur l'objet de contrôle de données (170), générant de ce fait des données d'intégrité cryptographique (175) ;
la liaison des données d'intégrité cryptographique (175) à l'objet de contrôle de données (170) après l'opération cryptographique ; et
l'envoi de l'objet de contrôle de données associé cryptographiquement lié aux données d'intégrité cryptographique (180) à un récepteur.

2. Procédé selon la revendication 1, et dans lequel le paquet de contrôle de droits (145) comprend l'un : d'un message de contrôle de droits ; et d'une licence de contenu de gestion de droits numériques.

3. Procédé selon la revendication 1 ou 2, dans lequel l'envoi comprend l'un : d'un envoi dans la bande (185) ; et d'un envoi hors bande (190).

4. Procédé selon la revendication 1, 2 ou 3, dans lequel les métadonnées (110) comprennent au moins l'une : d'informations de service (160) ; et d'une règle d'utilisation régissant l'utilisation de l'article de contenu (115).

5. Procédé selon l'une quelconque des revendications 1 à 4, dans lequel :
soit l'association cryptographique de la valeur de hachage de paquet de contrôle de droits (165) et des métadonnées (110) combinées qui comprennent l'objet de contrôle de données (170) comprend la signature numérique de l'objet de contrôle de données (170), générant de ce fait une signature numérique (310) ;
soit les données d'intégrité cryptographique (175) liées comprennent la signature numérique (310).

6. Procédé selon l'une quelconque des revendications 1 à 4, dans lequel
l'association cryptographique de l'objet de contrôle de données (170) comprend le cryptage de l'objet de contrôle de données (170) conformément à une clé, la clé comprenant un secret partagé avec le récepteur ; et
les données d'intégrité cryptographique (175) liées comprennent une référence au secret (330) partagé avec le récepteur.

7. Procédé selon l'une quelconque des revendications 1 à 6, dans lequel la fonction de hachage cryptographique (210) comprend l'une des fonctions candidates : SHA-1 ; SHA-2 ; et SHA-3.

8. Procédé pour une utilisation de contenu au niveau d'un récepteur, le procédé comprenant :
la réception d'un article de contenu (105) crypté ;
la réception d'un paquet de contrôle de droits de distribution de clé (145) associé de manière unique à au moins une partie de l'article de contenu (105) crypté ;
la réception d'un objet de contrôle de données (170) et de données d'intégrité cryptographique (175) liées à celui-ci ;
l'objet de contrôle de données (170) comprenant :
une valeur de hachage de paquet de contrôle de droits (165) ;
des métadonnées (110) ;
l'utilisation des données d'intégrité cryptographique (175) pour vérifier cryptographiquement l'intégrité de l'objet de contrôle de données (170) ;
l'application d'une fonction de hachage cryptographique au paquet de contrôle de droits (145) reçu, générant de ce fait une deuxième valeur de hachage de paquet de contrôle de droits (165A) ;
la comparaison de la deuxième valeur de hachage de paquet de contrôle de droits (165A) avec la valeur de hachage de paquet de contrôle de droits (165) reçu ; et
l'exécution du traitement des métadonnées si le résultat de la comparaison est positif, garantissant de ce fait que les métadonnées cryptographiques correspondent à l'article de contenu (105),
dans lequel l'utilisation de l'article de contenu par le récepteur dépend à la fois de ladite comparaison des valeurs de hachage de paquet de contrôle de droits (165, 165A) et de ladite vérification de l'intégrité de l'objet de contrôle de données (170).

9. Procédé selon la revendication 8, dans lequel le paquet de contrôle de droits (145) comprend l'un : d'un message de contrôle de droits ; et d'une licence de contenu de gestion de droits numériques.

10. Procédé selon la revendication 8 ou 9, dans lequel la réception de l'objet de contrôle de données comprend l'une : d'une réception dans la bande ; et d'une réception hors bande.

11. Procédé selon l'une quelconque des revendications 8, 9 ou 10, dans lequel les métadonnées comprennent au moins l'une : d'informations de service (160) ; et d'une règle d'utilisation régissant l'utilisation de l'article de contenu.

12. Procédé selon l'une quelconque des revendications 8 à 11, dans lequel la valeur de hachage de paquet de contrôle de droits et les métadonnées comprises dans l'objet de contrôle de données ont été signées numériquement et les données d'intégrité cryptographique comprennent la signature numérique de la valeur de hachage de paquet de contrôle de droits et les métadonnées.

13. Procédé selon l'une quelconque des revendications 9 à 11, dans lequel :
la valeur de hachage de paquet de contrôle de droits (165) et les métadonnées (110) comprises dans l'objet de contrôle de données (170) ont été cryptées ; dans lequel la valeur de hachage de paquet de contrôle de droits (165) cryptée et les métadonnées (110) ont été cryptées conformément à une clé, la clé comprenant un secret partagé avec l'expéditeur de l'objet de contrôle de données reçu ;
les données d'intégrité cryptographique comprennent une référence au secret (330) partagé ; et
l'utilisation des données d'intégrité cryptographique (175) pour vérifier cryptographiquement la valeur de hachage de paquet de contrôle de droits (165) et des métadonnées (110) comprend l'utilisation de la clé pour déchiffrer la valeur de hachage de paquet de contrôle de droits et les métadonnées cryptées.

14. Procédé selon l'une quelconque des revendications 8 à 13, dans lequel la fonction de hachage cryptographique (210) comprend l'une des fonctions candidates : SHA-1 ; SHA-2 ; et SHA-3.

15. Système pour associer des métadonnées (110) avec un article de contenu (105) crypté, le système comprenant :
un récepteur de métadonnées utilisé pour recevoir des métadonnées (110) pour une association avec un article de contenu (105) ;
un récepteur de paquet de contrôle de droits utilisé pour recevoir un paquet de contrôle de droits de distribution de clé (145) associé de manière unique à au moins une partie de l'article de contenu (105) crypté ;
un moteur cryptographique utilisé pour appliquer une fonction de hachage cryptographique (210) au paquet de contrôle de droits, générant de ce fait une valeur de hachage de paquet de contrôle de droits (165) ;
un processeur utilisé pour combiner la valeur de hachage de paquet de contrôle de droits (165) avec les métadonnées (110), créant de ce fait un objet de contrôle de données (170) ;
un deuxième moteur cryptographique (220) qui effectue une opération cryptographique sur l'objet de contrôle de données (170), générant de ce fait des données d'intégrité cryptographique (175) ;
un deuxième processeur qui lie les données d'intégrité cryptographique (175) à l'objet de contrôle de données (170) après l'opération cryptographique ; et
dans lequel le système est configuré pour envoyer l'objet de contrôle de données associé cryptographiquement lié aux données d'intégrité cryptographique (180) à un récepteur.

16. Système pour une utilisation de contenu au niveau d'un récepteur, le système comprenant :
un récepteur de contenu (130) utilisé pour recevoir un article de contenu (105) crypté ;
un récepteur de paquet de contrôle de droits (135) utilisé pour recevoir un paquet de contrôle de droits de distribution de clé (145) associé de manière unique à au moins une partie de l'article de contenu (105) crypté ;
un récepteur d'objet de contrôle de données (195) utilisé pour recevoir un objet de contrôle de données (170) et des données d'intégrité cryptographique (175) liées à celui-ci ; l'objet de contrôle de données (170) comprenant :
une valeur de hachage de paquet de contrôle de droits (165) ; et
des métadonnées (110) ;
un moteur cryptographique (420) utilisé pour l'utilisation des données d'intégrité cryptographique (175) pour vérifier cryptographiquement l'intégrité de l'objet de contrôle de données (170) ;
un deuxième moteur cryptographique utilisé pour appliquer une fonction de hachage cryptographique (410) au paquet de contrôle de droits (445) reçu, générant de ce fait une deuxième valeur de hachage de paquet de contrôle de droits (165A) ;
un processeur de comparaison utilisé pour comparer la deuxième valeur de hachage de paquet de contrôle de droits (165) avec la valeur de hachage de paquet de contrôle de droits (165A) reçue ; et
un processeur de métadonnées utilisé pour effectuer un traitement des métadonnées si le résultat de la comparaison est positif, garantissant de ce fait que les métadonnées (110) correspondent cryptographiquement à l'article de contenu (105),
dans lequel l'utilisation de l'article de contenu par le récepteur dépend à la fois de ladite comparaison des valeurs de hachage de paquet de contrôle de droits (165, 165A) et de ladite vérification de l'intégrité de l'objet de contrôle de données (170).
